# EUROPEAN PATENT SPECIFICATION

(11) **EP 2 384 874 B1**
(45) Date of publication and mention of the grant of the patent: **05.03.2014**
(21) Application number: 09839270.7
(22) Date of filing: 15.12.2009
(51) Int. Cl.: B29C 39/10, B29C 39/42, G02B 3/00, B29L 11/00

(54) **METHOD FOR PRODUCING WAFER LENS AND APPARATUS FOR PRODUCING WAFER LENS**
VERFAHREN ZUR HERSTELLUNG EINER WAFER-LINSE UND VORRICHTUNG ZUR HERSTELLUNG EINER WAFER-LINSE
PROCÉDÉ DE FABRICATION D'UNE LENTILLE MINCE ET APPAREIL DE FABRICATION D'UNE LENTILLE MINCE

(30) Priority: 30.01.2009 JP 2009020251
(43) Date of publication of application: 09.11.2011
(73) Proprietor: Konica Minolta Opto, Inc., Hachioji-shi Tokyo 192-8505 (JP)
(72) Inventor: FUJII Yuiti, Hachioji-shi Tokyo 192-8505 (JP); SARUYA Nobuhiro, Hachioji-shi Tokyo 192-8505 (JP); IMAI Toshiyuki, Hachioji-shi Tokyo 192-8505 (JP)
(74) Representative: Gille Hrabal
(86) International application number: PCT/JP2009/070889
(87) International publication number: WO 2010/087083

(56) References cited:
- JP-A- 7 175 132
- JP-A- 2003 340 843
- JP-A- 2004 046 093
- JP-A- 2006 263 975
- JP-A- 2006 263 975
- JP-A- 2007 194 304

## Description

### TECHNICAL FIELD

The present invention relates to a method for producing a wafer lens and an apparatus for producing a wafer lens.

### BACKGROUND ART

Conventionally, in the field of producing optical lenses, techniques have been investigated in which lens portions formed of a curable resin are provided on a glass substrate to obtain optical lenses having enhanced heat resistance (for example, refer to Patent Document 1). As one example of the production method of optical lenses employing these techniques, a method has been proposed in which on the surface of a glass substrate, a plurality of optical members formed of a curable resin are molded, that is, a "wafer lens" is formed, and then the glass substrate is cut into each lens portion.

In the case ofuse of a photocurable resin as the curable resin, a wafer lens production method will be briefly described below. Resin is dispensed onto a glass substrate which is sucked and fixed by using a vacuum chuck device Resin is dispensed onto the glass substrate (dispensing step). Thereafter, the glass substrate is moved up toward a mold arranged above to press the resin against the mold (imprinting step). The mold is light-transmissive, has cavities, and is held and fixed by a stamp holder.

Thereafter, as the height position of the glass substrate is maintained as is, the resin having been filled in the cavities is irradiated with light from above the mold to photocure the resin (exposure step). Then, the glass substrate is descend, and the resin is released from the mold (releasing step). Thus, a wafer lens in which a plurality of lens portions are formed on the glass substrate is completed. The glass substrate and the mold may be arranged upside down.

### RELATED ART DOCUMENT

### PATENT DOCUMENTS

Patent Document 1: Japanese Patent No. 3926380

### SUMMARY OF THE INVENTION

### OBJECT OF THE INVENTION

However, since the dispensing step, the imprinting step, the exposure step, and the releasing step described above are generally performed under atmospheric pressure, during the dispensing step and the imprinting step, air bubbles tend to be caught in the resin, and the method has a problem in which unfilled portions are generated in the cavities. Further, problems are noted in which in the exposure step, a resin is subjected to oxygen inhibition, whereby the resin is inadequately cured, and in the releasing step, a pressure difference is generated between the upper area and the lower area of the glass substrate, resulting in releasing difficulty. Therefore, it has been impossible to obtain a high precision wafer lens.

The present invention has been conceived in view of the aforementioned problems, and an object of the present invention is to provide a method and an apparatus for producing a high precision wafer lens with case.

Prior art document JP 7175132 A discloses a method and an apparatus to produce a lens sheet in which a lenticular lens pattern of a lens mold is transferred and a lens layer of uniform thickness is formed from a procured resin sheet.

Prior art document JP 2006263975 A discloses a manufacturing method of an optical element which is capable of efficiently manufacturing the optical element. The optical element which is produced according the disclosed method is provided with a resin layer. The optical element has a non-circular outer peripheral shape.

### MEANS FOR SOLVING THE OBJECT

According to one embodiment of the present invention provides a method for manufacturing a wafer lens in which an optical member made of photocurable resin is provided on at least one surface of a substrate, the method comprising:
a dispensing step in which the photocurable resin is dispensed to a mold having a negative shaped surface which corresponds to a shape of an optical surface of the optical member;
an imprinting step in which, after the dispensing step, the mold to which the photocurable resin has been dispensed and the substrate are pressed against each other;
an exposure step in which, after the imprinting step, light is applied to the photocurable resin; and
a releasing step in which, after the exposure step, the mold is released from the substrate,
wherein decompression is performed in at least a part of the dispensing step, the imprinting step, the exposure step, and the releasing step.

In the dispensing step and after the decompression, releasing to atmospheric pressure is performed.

In the imprinting step and after the decompression, releasing to atmospheric pressure is performed.

In the exposure step and after the decompression, releasing to atmospheric pressure is performed.

In the releasing step and after the decompression, releasing to atmospheric pressure is performed.

According to claim 7 the present invention provides a wafer lens producing apparatus, comprising:
a housing body which is provided with an opening in an upper surface thereof and has a lid member configured to close the opening;
a mold which is provided inside the housing body and has a cavity with a predetermined shape;
a substrate which is provided in the housing body so as to face the mold and vertically divide an interior space which is formed inside the housing body by the lid member;
wherein a lower space portion formed between the mold and the substrate and an upper space portion formed between the substrate and the lid member communicate with each other, and a decompression mechanism is provided in at least one of the lower space portion and the upper space portion so as to decompress the lower space portion or the upper space portion.

### ADVANTAGE OF THE INVENTION

According to the method for producing a wafer lens of the present invention, since decompression is performed in at least a part of the dispensing step, the imprinting step, the exposure step, and the releasing step, in the case where decompression is performed during the dispensing step and the imprinting step, air bubbles can be prevented from being caught in a resin. Further, in the imprinting step, warping and deformation of the substrate can be prevented. Still further, when decompression is performed during the exposure step, oxygen inhibition to the resin can be prevented and whereby the resin can be sufficiently cured. When decompression is performed during releasing, releasing is easily performed. Thus, a high precision wafer lens can be easily obtained.

According to the method for producing a wafer lens of the present invention, the lower space portion and the upper space portion communicate to each other, and a decompression mechanism is provided in at least one of the lower space portion and the upper space portion to realize a structure in which no pressure difference is generated between the lower space portion and the upper space portion. Therefore, the operation of the decompression mechanism makes it possible to easily allow the both space portions to be in the decompressed state, resulting in production of a high precision wafer lens.

### BRIEF DESCRIPTION OF THE DRAWINGS

FIG. 1 is a plan view showing a schematic constitution of a wafer lens;
FIG. 2 is a side view showing a schematic constitution of the wafer lens;
FIG. 3 is a perspective view showing a schematic constitution of an apparatus for producing a wafer lens according to a preferred embodiment of the present invention;
FIG. 4 includes a plan view and side views of the apparatus for producing a wafer lens of FIG. 3;
FIG. 5 is a view showing a schematic constitution of an X-axis moving mechanism used in the preferred embodiment of the present invention, being a cross-sectional view along the A-A line of FIG. 4;
FIG. 6 is a view showing a schematic constitution of a Y-axis moving mechanism used in the preferred embodiment of the present invention, being a cross-sectional view along the B-B line of FIG. 4;
FIG. 7 is a cross-sectional view showing a schematic constitution of an XY stage and the interior of a surface plate used in the preferred embodiment of the present invention;
Figs. 8a and 8b are cross-sectional views along the C-C line of FIG. 7;
FIG. 9 is a cross-sectional view showing a schematic constitution of a mold section used in the preferred embodiment of the present invention;
FIG.10 is a plan view showing a schematic constitution of FIG. 9;
FIG. 11 is a cross-sectional view showing a schematic constitution in which a dispenser is arranged opposite to a mold in the preferred embodiment of the present invention;

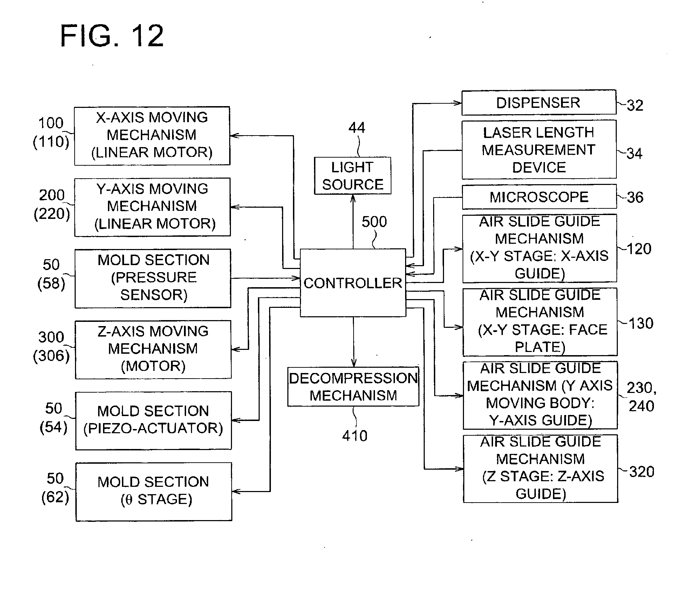

FIG. 12 is a block diagram showing a schematic control constitution used in the preferred embodiment of the present invention;
FIG.13 is a schematic flowchart to temporally describe the method for producing a wafer lens according to the preferred embodiment of the present invention;
FIG. 14 is a timing chart schematically showing pressure states in the steps ranging from the dispensing step to the releasing step of FIG. 13;
FIG.15 is a view schematically illustrating a constitution to adjust the parallelism between a glass substrate and a mold in the present embodiment; and
FIG. 16 is a view schematically illustrating coordinate axis transformation on the 2-dimensional plane of a mold in the present embodiment.

### PREFERRED EMBODIMENT OF THE INVENTION

With reference to the drawings, the preferred embodiment of the present invention will now be described.

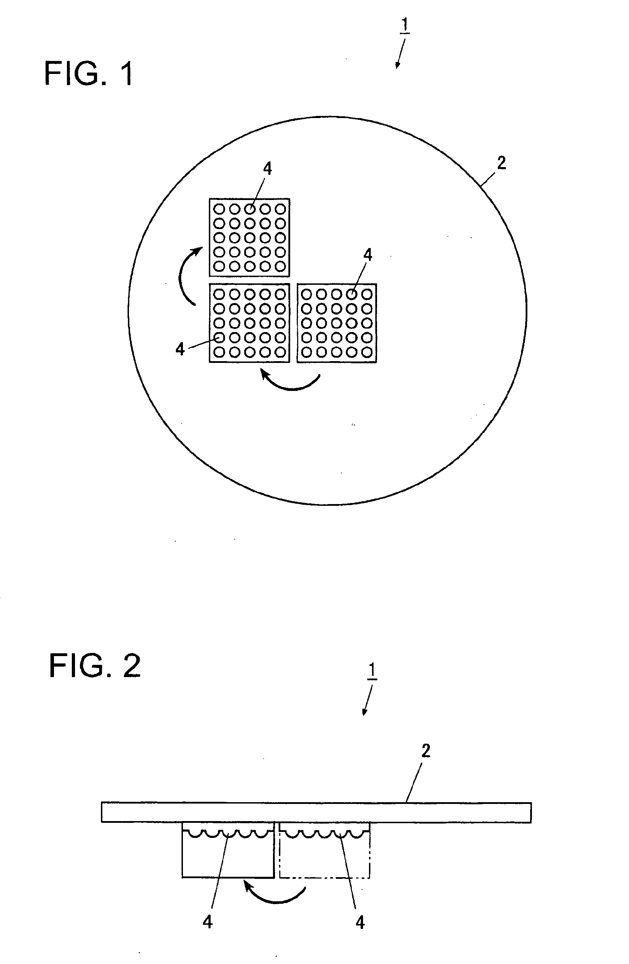

As shown in FIG. 1 and FIG. 2, a molded wafer lens 1 has a circular glass substrate 2 and a plurality of convex lens portions 4. The glass substrate 2 is one example of the substrate.

On the surface of the glass substrate 2, a plurality of convex lens portions 4 are arranged in an array manner. In such convex lens portions 4, a microstructure such as a diffraction groove and a step may be formed on the surface of the optical surface. Further, a concave lens is employable.

Since FIG. 1 and FIG. 2 show a mid-stage of the production process, the convex lens portions 4 are formed only on part of the surface of the glass substrate 2. In the present embodiment, on one glass substrate 2, the convex lens portions 4 are sequentially formed by the mold (refer to the arrows in FIG. 1 and FIG. 2), and finally, the glass substrate 4 is cut into individual pieces each having the convex lens portion 4.

Further, the order of forming convex lens portions 4 on a glass substrate 2 is not specifically limited thereto. Sequential formation in the rotational direction opposite to that of FIG. 1 or random formation may be employed.

The convex lens portions 4 are made of photocurable resin. As the photocurable resin, for example, an acrylic resin, an allyl ester resin, a PDMS, or an epoxy resin is usable. Any of these resins can be reactively cured via radial polymerization or cationic polymerization.

Next, an apparatus for producing a wafer lens 10 used for producing a wafer lens 1 will be described.

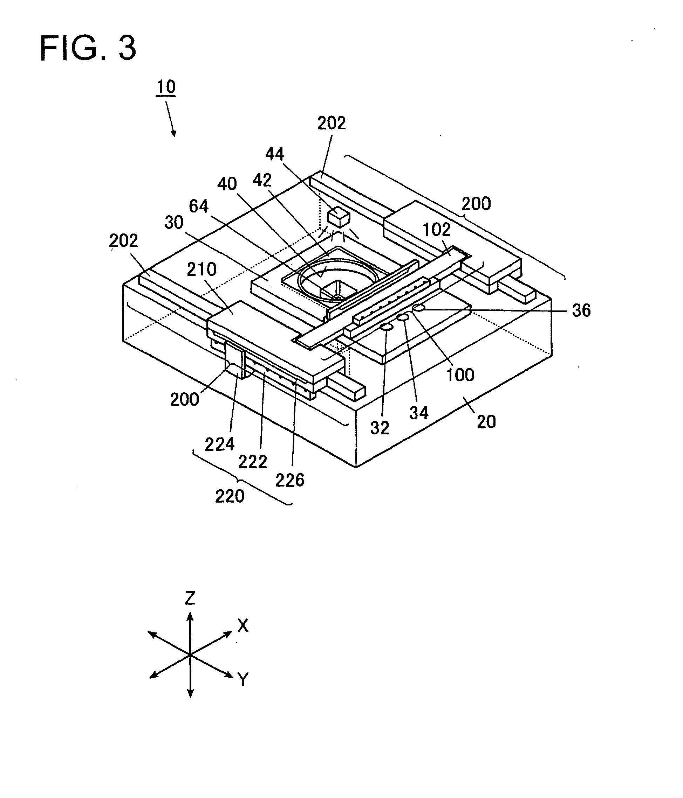

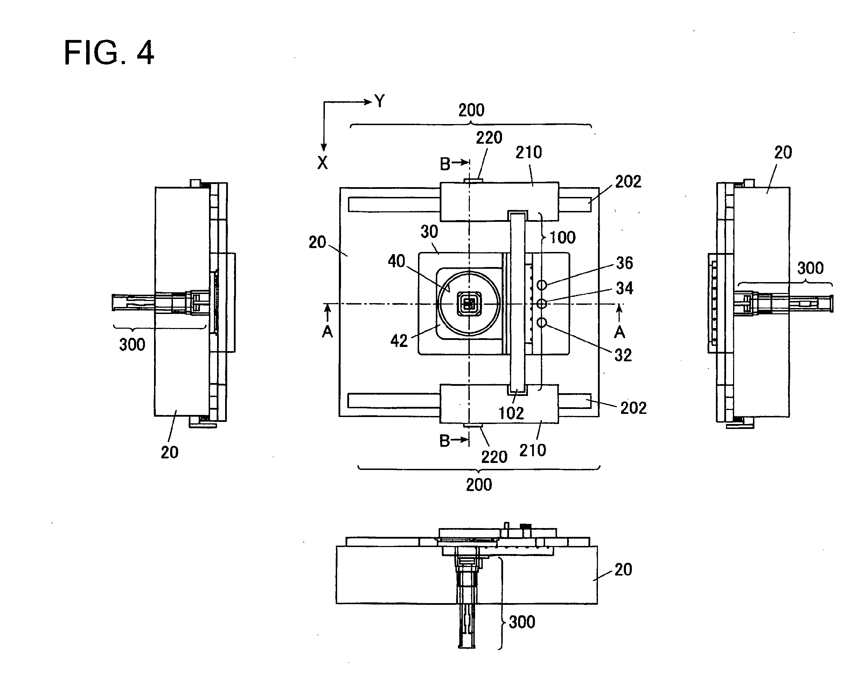

As shown in FIG. 3 and FIG. 4, the apparatus for producing a wafer lens 10 is mainly provided with a surface plate 20 having a rectangular shape, an XY stage 30 placed on the surface plate 20, an X-axis moving mechanism 100 for moving the XY stage 30 in the X-axis direction, and a pair of Y-axis moving mechanisms 200 for moving the XY stage 30 in the Y-axis direction.

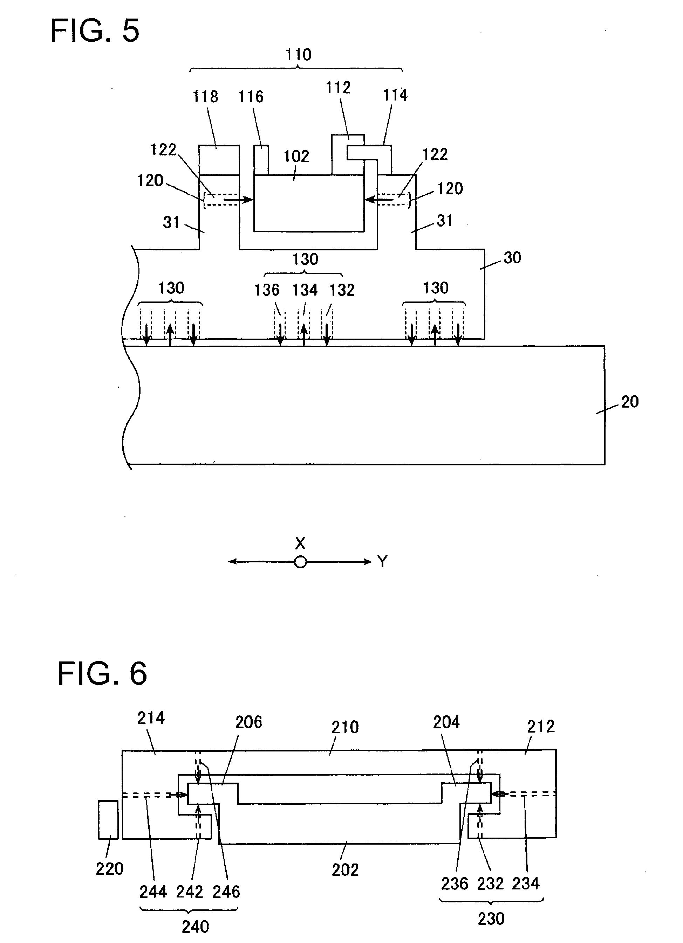

As shown in FIG. 4 and FIG. 5, the X-axis moving mechanism 100 has an X-axis guide 102 extending in the X-axis direction. As shown in FIG. 5, under the X-axis guide 102, the XY stage 30 is arranged. In the XY stage 30, a pair of elongated protrusions 31 extending in the X-axis direction are formed. Between the elongated protrusions 31, the X-axis guide 102 is arranged.

As shown in FIG. 5, the X-axis moving mechanism 100 has a linear motor 110 to actually move the XY stage 30 in the X-axis direction. The linear motor 110 has a well-known mechanism mainly containing a stator 112, a rotor 114, a scale 116, and a sensor 118.

The stator 112 is fixed to the X-axis guide 102. The rotor 114 is fixed to one elongated protrusion 31 of the XY stage 30 and movable along the X-axis guide 102. The scale 116 is fixed to the X-axis guide 102. The sensor 118 is fixed to the other elongated protrusion 31 of the XY stage 30.

In the X-axis moving mechanism 100, while the sensor 118 is detecting the scale 116, the rotor 114 moves along the stator 112;thus the XY stage 30 can move by a predetermined distance in the X-axis direction along the X-axis guide 102.

Each elongated protrusion 31 of the XY stage 30 is provided with an air slide guide mechanism 120. The air slide guide mechanism 120 has blowout holes 122 for blowing out air. The air slide guide mechanism 120 blows out air from each blowout hole 122 toward the X-axis guide 102 to float the XY stage 30 above the X-axis guide 102.

In the bottom portion of the XY stage 30, a plurality of air slide guide mechanisms 130 are placed. Each air slide guide mechanism 130 has two blowout holes 132 and 136 for blowing out air and a suction hole 134 to suck in air. In the air slide guide mechanism 130, air is blown out from each of the blowout holes 132 and 136 toward the surface plate 20, and at the same time air is sucked in from the suction hole 134, so that the XY stage 30 is floated above the surface plate 20 at a certain height.

Since the XY stage 30 is floated by the air slide guide mechanisms 120 and 130 above the X-axis guide 102 and the surface plate 20, the X-axis moving mechanism 100 can be smoothly moved.

As shown in FIG. 3 and FIG. 4, the Y-axis moving mechanism 200 has a pair of Y-axis guides 202 extending in the Y-axis direction. On the Y-axis guides 202, a pair of Y-axis moving bodies 210 are provided.

Both ends of the X-axis guide 102 are fixed to each Y-axis moving body 210. The Y-axis moving bodies 210 moves in the Y-axis direction along the Y-axis guides 202 while supporting the X-axis guide 102 and the the XY stage 30 held by the X-axis guide 102.

In details, the Y-axis moving mechanism 200 is provided with a linear motor 210. The linear motor 210 mainly contains a stator 222, a rotor 224, a scale 226, and a sensor (not shown) in the same manner as in the constitution of the linear motor 110 of the X-axis moving mechanism 100. While the sensor is detecting the scale 226, the rotor 224 moves along the stator 222; thus the Y-axis moving bodies 210 can move by a predetermined distance in the Y-axis direction along the Y-axis guides 202.

As shown in FIG. 6, on the end of the Y-axis moving body 210, hook-shaped hook portions 212 and 214 are formed. Inside the hook portions 212 and 214, the end portions 204 and 206 of the Y-axis guide 202 are disposed to be fitted with a clearance, respectively.

The hook portion 212 is provided with an air slide guide mechanism 230 and the hook portion 214 is provided with an air slide guide mechanism 240. The air slide guide mechanism 230 has blowout holes 232, 234, and 236 capable to blow out air from three directions (upward, sideward, and downward). The air slide guide mechanism 240 also has blowout holes 242, 244, and 246 capable to blow out air from three directions (upward, sideward, and downward).

The air slide guide mechanism 230 blows out air from each of the blowout holes 232, 234, and 236 toward the end portion 204 of the Y-axis guide 202. On the other hand, the air slide guide mechanism 240 blows out air from each of the blowout holes 242, 244, and 246 toward the end portion 206 of the Y-axis guide 202. Thus, the Y-axis moving body 210 is floated above the Y-axis guide 202. Further, by partially or entirely stopping the operation of the blowout holes of the air slide guide mechanisms 230 and 240, the Y-axis guide 202 is brought into contact with and attracted to a part of the inner wall of 210.

As shown in FIG. 3 and FIG. 4, on the XY stage 30, a dispenser 32 to drop a resin onto a glass substrate 2, a laser length measurement device 34 to measure the flatness (inclination), height, and position of a mold, and a microscope 36 used during alignment of a mold and a glass substrate 2 are provided.

As shown in FIG. 3, in the XY stage 30, a through-hole 40, which passes through the upper and the lower surface thereof and has a circular shape when viewed from upward, is formed, and a glass substrate 2 is provided in the through-hole 40.

In details, in the through-hole 40, a step is formed, and a glass substrate 2 is fixed to this step with an unshown spring. On the XY stage 30, a lid member 42 with a square shape when viewed from upward is provided to block the through-hole 40. The lid member 42 is formed of a light transmissive member such as quartz. Above the lid member 42, a light source 44 is placed.

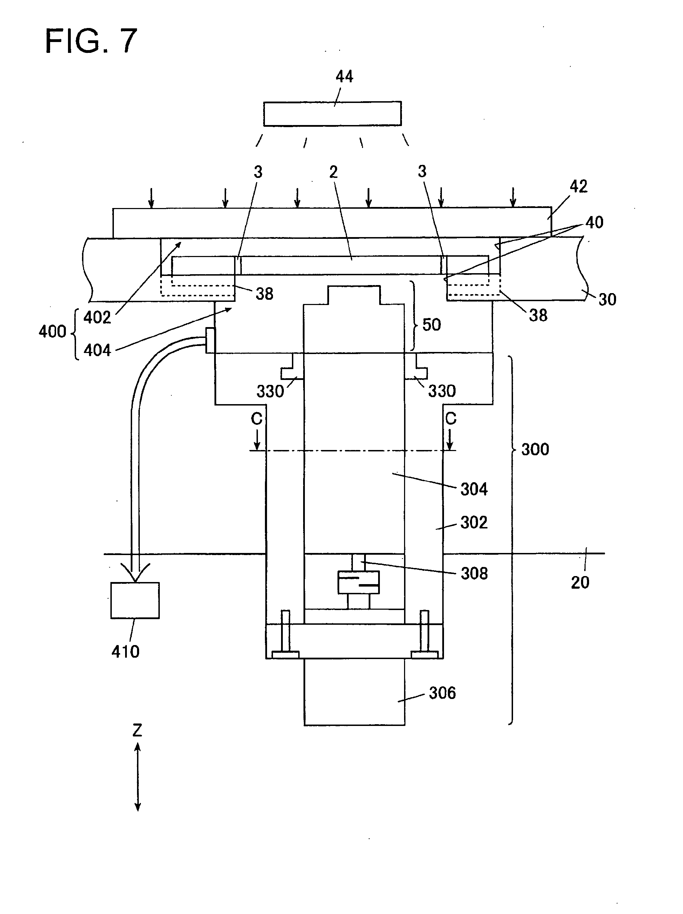

As shown in FIG. 7, in the surface plate 20, there are provided a mold section 50 for forming the convex lens portions 4 of a wafer lens 1 and a Z-axis moving mechanism 300 for moving the mold section 50 in the Z-axis direction. The mold section 50 is disposed on the Z-axis moving mechanism 300 (Z stage 304).

The Z-axis moving mechanism 300 is mainly provided with a Z-axis guide 302 having a square cylinder having a flange on its upper portion, a Z stage 304 moving within the Z-axis guide 302 in the Z-axis direction, and a motor 306 for moving the Z stage 304 in the Z-axis direction (vertical direction).

The motor 306 incorporates a potentiometer. The motor is connected to a shaft 308. In the Z-axis moving mechanism 300, the operation of the motor 306 expands and contracts the shaft 308 vertically, and the Z-stage 304 and the mold section 50 thus move vertically.

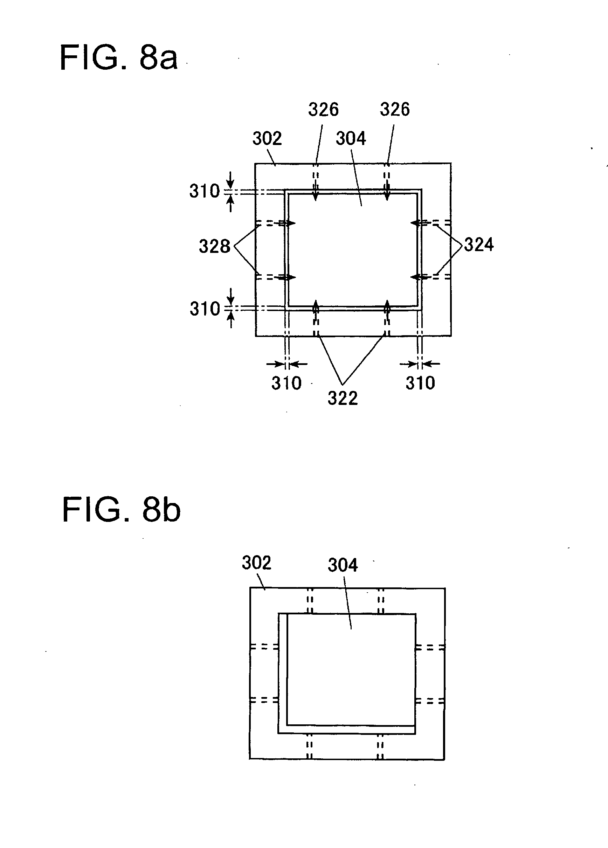

As shown in FIG. 8a, between the inner circumferential surface of the Z-axis guide 302 and the side surface of the Z stage 304, a clearance 310 is provided.

The Z-axis guide 320 is provided with an air slide guide mechanism 320. The air slide guide mechanism 320 has blowout holes 322, 324, 326, and 328 for blowing out air. In the air slide guide mechanism 320, air is blown out from each of the blowout holes 322, 324, 326, and 328 toward the Z stage 304 to float the Z stage 304.

As shown in FIG. 7, the inner circumferential surface forming the flange of the Z-axis guide 320 is sealed with a sealing member 330 such as silicone grease, oil seal, or an O-ring, and hence, in order to prevent air in the clearance 310 from leaking (escaping) into the upper side of the Z-axis guide 302, the interface between the Z-axis guide 320 and the Z stage 304 is kept airtight

Further, in order to produce the same effect, it is more preferable that although not shown, the periphery of the Z stage 304 moving vertically is provided with a flange portion, and then between it and the flange portion of the fixedly positioned Z-axis guide 302, metal bellows covering is applied.

As shown in FIG. 7, the XY stage 30, the surface plate 20, and the Z-axis guide 302 constitute an housing body with the upper face open. Then, the upper face opening of the housing body is covered by the lid member 42, and whereby a space portion 400 is formed in the area surrounded by the lid member 42, the XY stage 30, the surface plate 20, and the Z-axis guide 302. The space portion 400 is divided, by a glass substrate 2 placed on the XY stage 30, into an upper space portion 402 formed between the glass substrate 2 and the lid member 42 and a lower space portion 404 formed between the glass substrate 2 and the Z-axis moving mechanism 300.

Here, communication holes 3, which penetrate between the upper face and the lower face to communicate the upper space portion 420 and the lower space portion 404, are formed on the periphery of the glass substrate 2, thereby eliminating the pressure difference between the space portions 402 and 404. The lower space portion 404 is connected to a decompression mechanism 410 such as a vacuum pump. The decompression mechanism 410 operates to decompress the space portion 400.

Instead of the communication holes 3 formed in a glass substrate 2, as indicated by the dotted lines in FIG. 7, communication holes 38, for example, may be formed in the XY stage 30.

Further, although the decompression mechanism 410 is made to be connect to the lower space portion 404, it may be connected to the upper space portion 402.

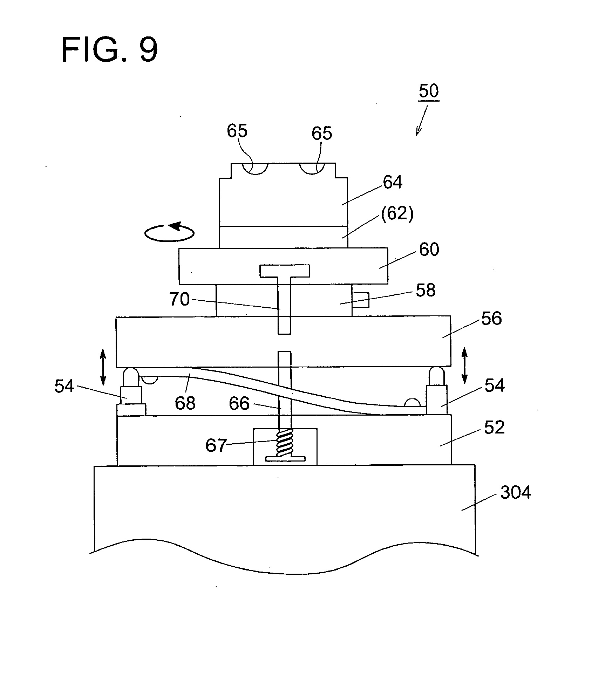

As shown in FIG. 9, the mold section 50 is mainly includes those things which are provided in order on the Z stage 304: a first support platform 52; a piezo-actuator 54; a second support platform 56; a pressure sensor 58; a third support platform 60; and a mold 64.

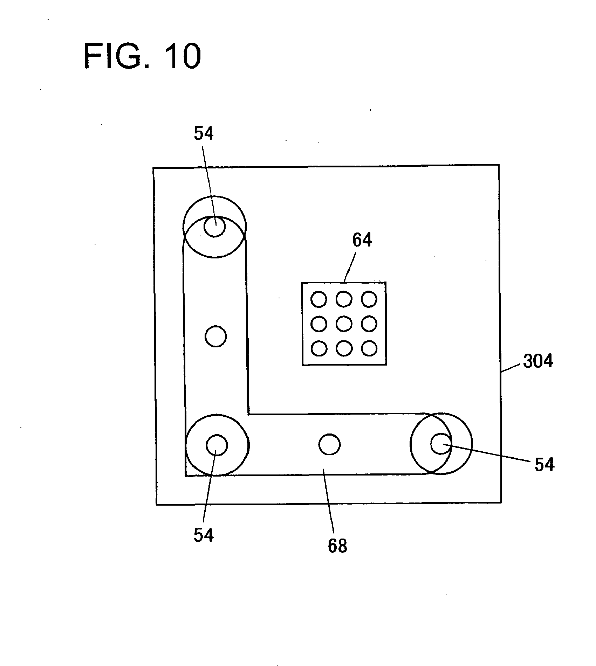

The first support platform 52 and the second support platform 56 are connected to each other with a compression screw 66 and energized to become close to each other with a spring 67. Between the first support platform 52 and the second support platform 56, three piezo-actuators 54, and an L-shaped plate spring 68 are provided (refer to FIG. 10). The second support platform 56 and the third support platform 60 are connected with a screw 70. Between the second support platform 56 and the third support platform 60, a pressure sensor 58 is provided. Further, as described later, between the third support platform 60 and the mold 64, a θ stage 62 for moving the mold 64 may be provided.

As shown in FIG. 10, each of the 3 piezo-actuators 54 is disposed on each of the 3 corners of the first support platform 52 to support the second support platform 56 at those three points. In the mold section 50, the operation of each piezo-actuator 54 is controlled on the basis of an output value of the pressure sensor 58, so that the inclination of the second support platform 56, the first support platform 60, and the mold 64 is adjusted. With that arrangement, the mold 64 and the glass substrate 2 can be adjusted parallel to each other, and after the mold 64 is filled with resin, mold clamping and transfer molding can be performed with the load of the resin being adjusted at a desired pressure,. Incidentally, although the present example is constituted by three piezo-actuators, there is no limitation in the number of piezo-actuators, and any appropriate arrangement and the number can be employed only if the configuration is appropriate for the above-described parallelism correction and load control.

In the mold 64, a plurality of cavities 65 (concave portions) are formed in an array. The surface (molding face) of the cavity 65 has a negative shape corresponding to a convex lens portion 4 of a wafer lens 1.

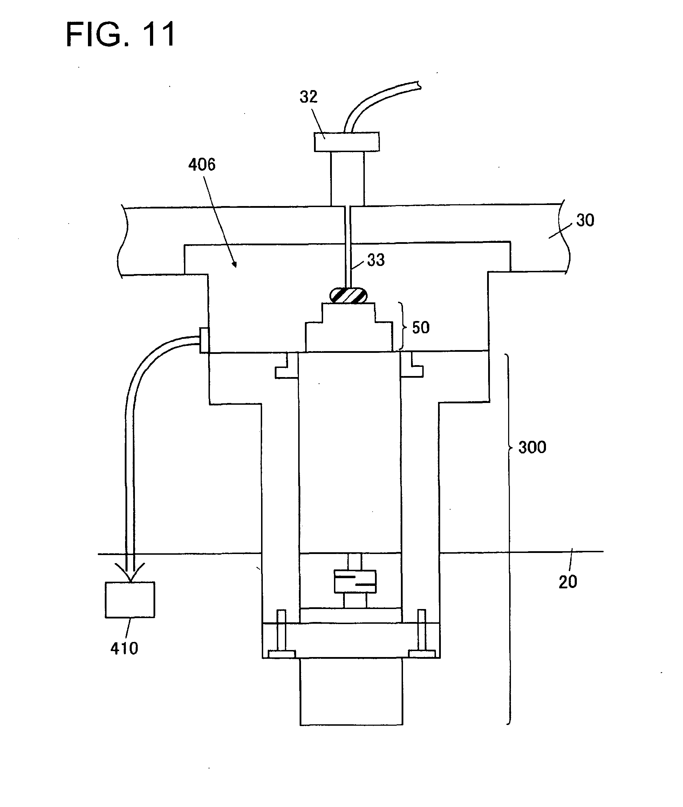

As shown in FIG. 11, the dispenser 32 has a needle portion 33 to drop resin, and the needle portion 33 penetrates the XY stage 30. With the dispenser 32 of the XY stage 30 and the mold section 50 being oppositely arranged, a space portion 406 is formed in the area surrounded by the XY stage 30, the surface plate 20, and the Z-axis moving mechanism 300, and the tip of the needle portion 33 of the dispenser 32 is arranged within the space portion 406. In this state, the decompression mechanism 410 operates to put the space portion 406 in a decompressed state.

The rest of the constitution in FIG. 11 is the same as that in FIG. 7 and therefore the same symbols are assigned to the same components, and descriptions thereof are omitted.

The apparatus for producing a wafer lens 10 having the above constitution is provided with a controller 500. The controller 500 is connected to the dispenser 32, the laser length measurement device 34, the microscope 36, the light source 44, the mold section 50 (including, for example, the piezo-actuators 54, the pressure sensor 58, and the θ stage 62), the X-axis moving mechanism 100, the Y-axis moving mechanism 200, the Z-axis moving mechanism, the air slide guide mechanisms 120, 130, 230, 240, and 320, and the decompression mechanism 410. The controller 500 receives detection results of these members and controls the operation (start and stop) thereof

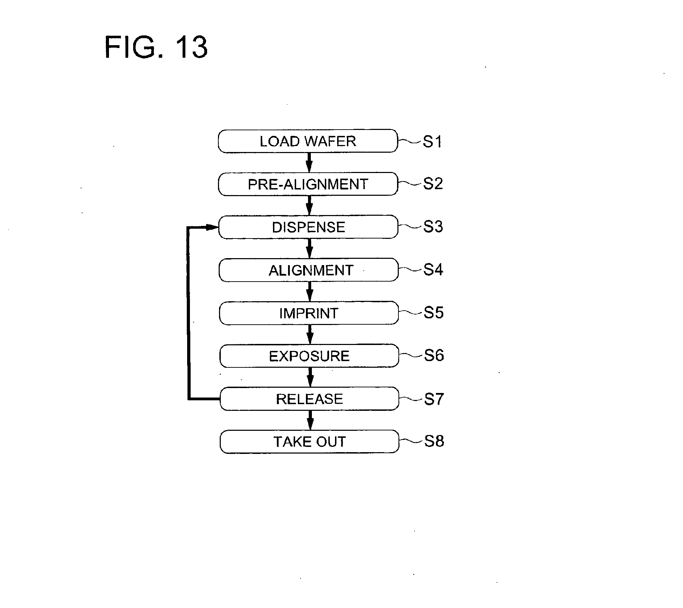

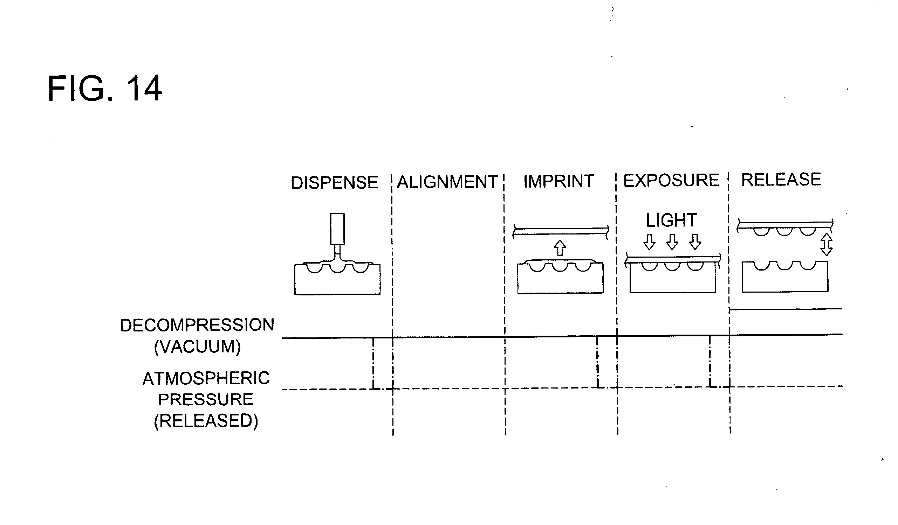

Next, with reference to FIG. 13 and FIG. 14, a method to produce a wafer lens 1 by using the above apparatus for producing a wafer lens 10 will be described.

First, a glass substrate 2 is placed on the XY stage 30 (wafer load step S1), and the through-hole 40 of the XY stage 30 is covered with the lid member 42 (refer to FIG. 7).

Thereafter, the X-axis moving mechanism 100 (linear motor 110), the Y-axis moving mechanism 200 (linear motor 220), and the air slide guide mechanisms 120, 130, 230, and 240 are controlled, and then, the XY stage 30 is, while floated by air, slidingly moved in the X-axis direction and the Y-axis direction so that the dispenser 32 is located over the mold 64 (pre-alignment step S2).

In the pre-alignment step, the dispenser 32 is positioned by observing an alignment mark assigned to a predetermined position of the surface plate 20.

After the dispenser 32 is positioned, the XY stage 30 and the surface plate 20 are put into a fixed state, in which they are in close contact to each other, by terminating the operation of at least the air slide guide mechanism 130, and a predetermined amount of resin is then dispensed from the needle portion 33 of the dispenser 32 onto a mold 64 of the mold section 50 (dispensing step S3, refer to FIG. 11).

In this case, as indicated by the solid lines in FIG. 14, the decompression mechanism 410 is controlled to decompress the space portion 406. Herein, the decompression basically means that the space portion 406 is in a vacuum state, specifically 10⁻² MPa and less.

Since the dispensing step S3 is performed in the decompressed state, air bubbles are prevented from being caught in the resin.

Incidentally, in the present embodiment, the dispensing step S3 to the releasing step S7 are supposed to be basically in the decompressed state. The definition of this decompression is based on the above one.

Then, the X-axis moving mechanism 100 (linear motor 110), the Y-axis moving mechanism 200 (linear motor 220), and the air slide guide mechanisms 120,130, 230, and 240 are controlled so that the XY stage 30 is, while floated by air, slidably moved in the X-axis direction and the Y-axis direction to position the glass substrate 2, which has already been placed, over the mold 64 of the mold section 50 (alignment step S4, refer to FIG. 7).

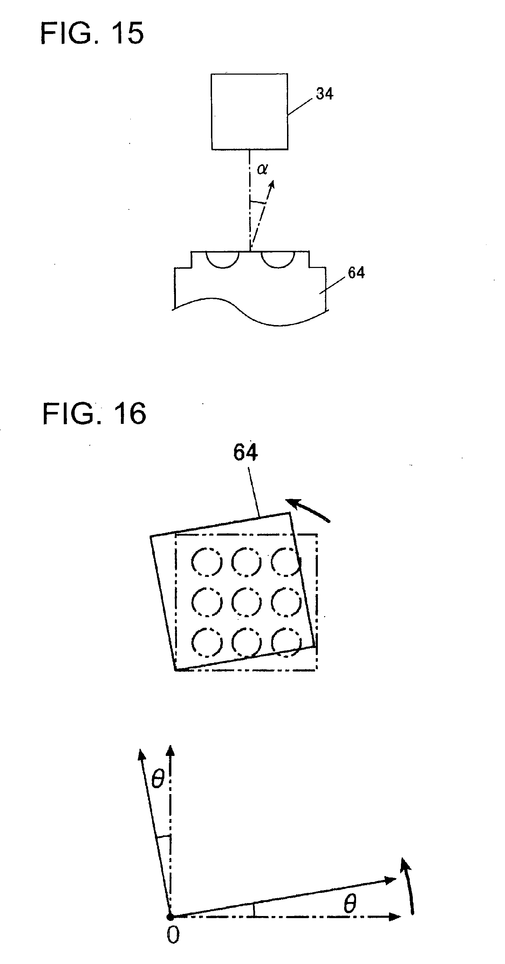

Then, the following processings are as follows.
(1) As shown in FIG. 15, the well-known laser length measurement device 34 is arranged immediately above the mold 64, and the operation of the air slide guide mechanisms 120, 130, 230, and 240 is terminated to create the fixed state in which the XY stage 30 and the surface plate 20 are in close contact.

At the same time, the air slide guide mechanism 320 is controlled to blow out from, for example, only the blowout holes 322 and 328 so that the Z stage 304 is partially brought in contact with the inner wall of the Z-axis guide 302, as shown in FIG. 8b. Thus, the friction force between the Z stage 304 and the Z-axis guide 302 holds the mold section 50 at a fixed position.
(2) Thereafter, the laser length measurement device 34 is used to measure heights at three positions or more. From the results, the inclination of the mold 64 upper face and the height position of the mold 64 are calculated, and then based on output values (a deviated value of angle α, refer to FIG. 15) from the calculation, the piezo-actuators 54 are controlled to make the lower face of the glass substrate 2 and the upper face of the mold 64 parallel to each other.

Next, the fixed state is released, and then the microscope 36 is moved immediately above the mold 64. The operation of the air slide guide mechanisms 120,130,230, and 240 are then terminated to create a fixed state in which the XY stage 30 and the surface plate 20 are in close contact to each other.

At the same time, the air slide guide mechanism 320 is controlled to blow out from, for example, only the blowout holes 322 and 328 so that the Z stage 304 is partially brought in contact with the inner wall of the Z-axis guide 302, as shown in FIG. 8b. Thus, the position of the mold section 50 is fixed (positioned). In other words, the friction force between the Z stage 304 and the Z-axis guide 302 holds the mold section 50 at a fixed position.

Since the guide 302 and stage 304 are brought into contact, the mold mounted thereon is held always at the same position and angle. As a result, advantages are produced in which the stage and the mold is smoothly operated in the unlocked state, and the molding operation is performed in the locked state in the same posture as that in the adjustment.
(3) Thereafter, the microscope 36 detects the mold 64. Then, on the basis of the detection result, the real position of the mold 64 is figured out. In accordance with the real position, the axis coordinate of the initial position of the mold 64 having been previously set by the controller 500 is converted.

In details, at least two positions are identified from above the mold 64, by using the microscope 36, and one position is then identified as the origin O and the other position is identified as a correction point. For example, alignment marks are positioned at opposite corners of the mold 64 in advance, and one alignment mark is identified as the origin O and the other alignment mark is identified as the correction point. Here, in the present embodiment, the microscope 36 is used as one example of the position detection device to detect the arrangement position of the mold 64.

Thereafter, a straight line for coordinate conversion connecting the origin O and the correction point is calculated, and the error (the deviated value of angle α, refer to FIG.16) between the thus-calculated straight line and a preset axis coordinate is calculated to perform the coordinate conversion of the axes based on this error. Namely, in the controller 500, the arrangement position of the plane surface of the mold 64 is previously set as an coordinate, and then the error of the straight line for coordinate conversion, which has been calculated through the identification of the microscope 36, from the set coordinate is figured out, whereby as shown in FIG. 16, the preset coordinate (refer to the broken line) is converted into the coordinate (refer to the solid-line) calculated from the error. Thus, the two-dimensional relative positioning relation between the mold 64 and the glass substrate 2 is fixed and then the movement of the glass substrate 2 with respect to the mold 64 is accurately performed.

Alternatively, a θ stage 62 (refer to FIG. 9) for rotating the mold 64 may be provided in the mold section 50, and instead of performing the above-mentioned coordinate conversion in the controller 500, the θ stage 62 may be controlled to rotationally move the mold 64 to comply with the preset coordinate (the deviated coordinate is restored to the original position).

In this state, the mold section 50 is position-controlled so as to move up the mold 64 to a predetermined position with respect to the glass substrate 2, and the mold 64 is held at that position (imprinting step S5).

In details, the Z-axis moving mechanism (motor 306) is operated to extend the shaft 308upward to move the Z stage 304 upward.

In this case, on the basis of an output value of the potentiometer incorporated in the motor 306, the operation of the motor 306 is controlled to move the Z stage 304 up to a predetermined position. As a result, the resin is, being pressed against the glass substrate 2, gradually spreads, and then is filled in the cavities 64 of the mold 64.

Also in this imprinting step S5, the decompression mechanism 410 is controlled to decompress the space portion 400.

Since the resin is pressed against the glass substrate 2 under reduced pressure, air bubbles are prevented from being caught in the resin. Further, since the space portion 400 is in the decompressed state, there is no pressure difference between the upper space portion 402 and the lower space portion 404, whereby warping and deformation of the glass substrate 2 is prevented.

Thereafter, while the Z stage 304 is maintained at the set position, the light source 44 is controlled to irradiate the resin with light to cure (exposure step S6).

At this moment, since the decompression mechanism 410 is controlled to keep the space portion 400 in the decompressed state, oxygen inhibition with respect to the resin is prevented, whereby the resin is sufficiently cured. The same effect can be produced by replacing the air for gas other than oxygen.

Herein, if the Z stage 304 is kept at a predetermined height while the resin is cured (when the resin is cured and thereafter),, when cure-induced shrinkage occurs, the glass substrate 2 does not follow the shrinkage, whereby distortion may occur inside the resin or the surface shape of the cavities 65 may not be appropriately transferred to the resin.

Therefore, the light source 44 is turned on for a certain period of time and a certain amount of light is applied to the resin, and then the mold section 50 is pressure-controlled so that the pressing pressure of the mold 64 against the glass substrate 2 is maintained at a predetermined pressure. In details, on the basis of the output value of the pressure sensor 58, the piezo-actuators 54 are operated to move the mold 64 upward.

Subsequently, the light source 44 is turned off to terminate light application to the resin. After the application of light is terminated, the motor 306 is operated to contract the shaft 308 downward to move the Z stage 304 downward. Thus, the thus-cured resin is released from the mold 64 together with the glass substrate 2 (releasing step S7).

At this moment, the decompression mechanism 410 is controlled to keep the space portion 400 in a decompressed state, and no atmospheric pressure is applied, resulting in easy releasing. Thus, as shown in FIG. 1 and FIG. 2, a plurality of convex lens portions 4 corresponding to the cavities 65 of the mold 64 are formed on the glass substrate 2.

Thereafter, the dispensing step S3, the imprinting step S5, the exposure step S6, and the releasing step S7 are repeated a predetermined number of times, and then a plurality of convex lens portions 4 are repeatedly formed on the glass substrate 2 (refer to FIG. 1 and Fig. 2) to produce a wafer lens 1.

After a predetermined number of convex lens portions 4 are formed on the glass substrate 2, the moving mechanisms 100, 200, and 300 and the air slide guide mechanisms 120, 130, 230, 240, and 320 are operated to move the XY stage 30 and the Z stage 304 to a predetermined position. Finally, the lid member 42 is removed from the XY stage 30 to take out the glass substrate 2 (taking-out step S8).

Incidentally, in the present embodiment, a so-called a "step and repeat method" is exemplified in which convex lens portions 4 are sequentially formed on the glass substrate 2by the unit of a mold. However, a so-called a "collective method" may be employed in which a large-size mold corresponding to the size (area) of a glass substrate 2 is used instead of the mold 64, and a desired number of convex lens portions 4 are thus collectively formed on the glass substrate 2.

Further, the vicinity of the glass substrate 2 has been locally in a decompressed state in the steps from the dispensing step S3 to the releasing step S7, in the present embodiment. However, for either of the "step and repeat method" and the "collective method", the entire apparatus for producing a wafer lens 10 (except the controller 500) may be placed in a closed system such as a chamber, and the whole apparatus 10, including the vicinity of the glass substrate 2, may be in a decompressed state.

Still further, in the present embodiment, the controller is made such that the start or stop of the XY air slide mechanism, and the start or stop of the Z air slide mechanism are both simultaneously performed. However, either or at least one may be performed.

As described above, according to the present embodiment, since a dispensing step, the imprinting step, the exposure step, and the releasing step are performed under reduced pressure, air bubbles is prevented from being caught in resin in the dispensing step or the imprinting step. Further, especially during the imprinting step, since there is generated no pressure difference between the upper space portion 402 and the lower space portion 404in the employed configuration, warping and deformation of a glass substrate 2 is prevented. Still further, when decompression is performed during the exposure step, oxygen inhibition to resin is prevented, and whereby the resin is sufficiently cured. The decompression during releasing results in easy releasing. Thus, a high precision wafer lens 1 is obtained.

Further, in the apparatus for producing a wafer lens 10, the lower space portion 404 and the upper space portion 402 are communicatively connected through the communication holes 38 and the lower space portion 404 is connected to a decompression mechanism 410, whereby there is generated no pressure difference between the lower space portion 404 and the upper pressure portion 402. Therefore, by operating the decompression mechanism 410, the space portions 404 and 402 both easily get into in a decompressed state, and thereby leading to production of a high precision wafer lens 1, also in this respect.

Incidentally, the present invention is not limited to the above embodiment and can be appropriately modified without departing from the scope of the invention.

For example, in the above embodiment, in the imprinting step S5 and the exposure step S6, the space portion 400 was decompressed. However, the communication holes 3 formed in a glass substrate 2 may be eliminated, and only the lower space portion 404 may be decompressed.

In this case, as indicated by the dashed-lines in FIG.14, releasing to atmospheric pressure is preferably performed in at least one of the dispensing step S3, the imprinting step S5, and the exposure step S6.

In the dispensing step S3, in the case of filling resin under a reduced pressure, bubbles are prevented from being caught in the resin. On the other hand, surface tension applied to the resin may generate bubbles in the resin. In order to address this issue, after the decompressed state has been created, releasing to atmospheric pressure may be performed once. Thus, bubbles are prevented from being generated, whereby unfilled portions of the resin in the cavities 65 are eliminated.

In the imprinting step S5, when both the upper space portion 402 and the lower space portion 404 are in a decompressed state, no pressure difference is generated between the upper space portion 402 and the lower space portion 404, whereby air bubbles are prevented from being caught in the resin. However, for example, when the upper space portion 402 is in atmospheric pressure and the lower space portion 404 is in a decompressed state, the pressure difference warps or deforms the glass substrate 2. In this occasion, if the lower space portion 404 may be brought into atmospheric pressure from the decompressed state, the glass substrate 2 can be maintained to be flat and then imprinting can be performed in the even state.

In the exposure step S6, when the resin is exposed in the decompressed state, curing inhibition to the resin by oxygen is prevented and then the resin can be sufficiently cured. Thereafter, if releasing to atmospheric pressure is performed, transfer performance is enhanced. Releasing to atmospheric pressure in each of these steps is shown by the alternate long and short dash lines in FIG. 14.

Further, in the above embodiment, an example in which resin convex lens portions 4 are formed by using a mold 64 has been described. However, the embodiment may be employed in the case of forming a resin mold (sub-master) using a metal mold 64 as a mother mold (master) and also in the case of use as an intermediate mold.

### DESCRIPTION OF THE NUMERALS

1: wafer lens
2: glass substrate
3: communication hole
4: convex lens portion
10: apparatus for producing a wafer lens
20: surface plate
30: XY stage
31: elongated protrusion
32: dispenser
33: needle portion
34: laser length measurement device
36: microscope
38: communication hole
40: through-hole
42: lid member
44: light source
50: mold section
52: first support platform
54: piezo-actuator
56: second support platform
58: pressure sensor
60: third support platform
62: θ stage
64: mold
65: cavity
66: screw
68: plate spring
70: screw
100: X-axis moving mechanism
102: X-axis guide
110: linear motor
112: stator
114: rotor
116: scale
118: sensor
120: air slide guide mechanism
122: blowout hole
130: air slide guide mechanism
132: 136: blowout hole
134: suction hole
200: Y-axis moving mechanism
202: Y-axis guide 202
204, 206: end portion
210: Y-axis moving body
212, 214: hook portion
220: linear motor
222: stator
224: rotor
226: scale
230: air slide guide mechanism
232, 234, 236: blowout hole
240: air slide guide mechanism
242, 244, 246: blowout hole
300: Z-axis moving mechanism
302: Z-axis guide
304: Z stage
306: motor
308: shaft
310: clearance
320: air slide guide mechanism
322, 324, 326, 328: blowout hole
330: sealing member
400: space portion
402: upper space portion
404: lower space portion
406: space portion
410: decompression mechanism
500: control device

## Claims

1. A method for manufacturing a wafer lens in which an optical member made of photocurable resin is provided on at least one surface of a substrate, the method comprising:
a dispensing step in which the photocurable resin is dropped into a mold having a negative shaped surface which corresponds to a shape of an optical surface of the optical member;
an imprinting step in which, after the dispensing step, the mold into which the photocurable resin has been dropped and the substrate are pressed against each other;
an exposure step in which, after the imprinting step, light is applied to the photocurable resin; and
a releasing step in which, after the exposure step, the mold is released from the substrate,
wherein a space surrounding the resin is decompressed in at least a part of the dispensing step, the exposure step, and the releasing step.

2. The method of claim 1, wherein In the dispensing step and after the decompression, the space surrounding the resin is released to atmospheric pressure.

3. The method of claim 1 or 2, wherein in the exposure step and after the decompression, the space surrounding the resin is released to atmospheric pressure.

4. The method of any one of claims 1 to 3, wherein in the releasing step and after the decompression, the space surrounding the resin is released to atmospheric pressure.

5. The method of any one of claims 2 to 4, wherein the space surrounding the resin is decompressed In at least a part of the imprinting step.

6. The method of claim 5, wherein In the imprinting step, the space surrounding the resin is released to atmospheric pressure after the decompression in the imprinting step.

7. A wafer lens producing apparatus, comprising:
a housing body which is constituted by a XY stage (30), a surface plate (20) and a Z-axis guide (302) and which is provided with an opening In an upper surface thereof and has a lid member (42) configured to close the opening;
a mold (64) which is provided inside the housing body and has a cavity with a predetermined shape;
a substrate (2) which is provided in the housing body so as to face the mold and vertically divide an interior space which is formed inside the housing body by the lid member (42);
wherein a lower space portion (404) formed between the mold (64) and the substrate (2) and an upper space portion (402) formed between the substrate (2) and the lid member (42) communicate with each other, and a decompression mechanism is provided in at least one of the lower space portion (404) and the upper space portion (402) so as to decompress the lower space portion or the upper space portion (402), **characterized in that** the wafer lens producing apparatus further comprises a dispenser (32) which is provided on the housing body and has a needle portion (33) that penetrates the XY stage (30) to drop the photocurable resin into the mold (64).

## Patentansprüche

1. Verfahren zur Herstellung einer Wafer-Linse, wobei ein aus fotohärtbarem Harz hergestelltes optisches Element auf mindestens einer Oberfläche eines Substrats bereitgestellt wird, wobei das Verfahren umfasst:
einen Schritt der Ausgabe, wobei das fotohärtbare Harz in eine Form mit einer negativ geformten Oberfläche fallengelassen wird, die einer Form von einer Oberfläche des optischen Elements entspricht;
einen Schritt des Bedruckens, wobei nach dem Schritt der Ausgabe, die Form, in die das fotohärtbare Harz fallengelassen wurde, und das Substrat zusammengepresst werden;
einen Schritt der Exposition, wobei nach dem Druckschritt, Licht auf das fotohärtbare Harz angewandt wird; und
einen Schritt der Entformung, wobei nach dem Schritt der Exposition, das Substrat entformt wird,
wobei ein Raum, der das Harz umgibt, in mindestens einem Teil des Schritts der Ausgabe, des Schritts der Exposition und des Schritts der Entformung dekomprimiert wird.

2. Verfahren nach Anspruch 1, wobei in dem Schritt der Ausgabe und nach der Dekompression, wobei der Raum, der das Harz umgibt, auf Atmosphärendruck entspannt wird.

3. Verfahren nach Anspruch 1 oder 2, wobei in dem Schritt der Exposition und nach der Dekompression, der Raum, der das Harz umgibt, auf Atmosphärendruck entspannt wird.

4. Verfahren nach einem der Ansprüche 1 bis 3, wobei in dem Schritt der Entspannung und nach der Dekompression, der Raum, der das Harz umgibt, auf Atmosphärendruck entspannt wird.

5. Verfahren nach einem der Ansprüche 2 bis 4, wobei der Raum, der das Harz umgibt, in mindestens einem Teil des Schritts des Bedruckens entspannt wird.

6. Verfahren nach Anspruch 5, wobei in dem Schritt des Bedruckens der Raum, der das Harz umgibt, nach der Dekompression in dem Schritt des Bedruckens auf Atmosphärendruck entspannt wird.

7. Gerät zur Herstellung einer Wafer-Linse, umfassend:
einen Gehäusekörper bestehend aus einer Plattform XY (30), einer Oberflächenplatte (20) und einer Z-Achsenführung (302), und der mit einer Öffnung in einer oberen Fläche davon versehen ist und ein zum Schießen des Deckelelements konfiguriertes Deckelelement (42) aufweist;
eine Form (64), die im Inneren des Gehäusekörpers bereitgestellt ist und einen Hohlraum mit einer vorbestimmten Form aufweist;
ein Substrat (2), das in dem Gehäusekörper bereitgestellt ist, so dass es in Richtung der Form zeigt und einen Innenraum, der im Inneren des Gehäusekörpers bereitgestellt ist, durch das Deckelelement (42) vertikal teilt;
wobei ein unterer Raumteil (404), der zwischen der Form (64) und dem Substrat (2) ausgebildet ist, und ein oberer Raumteil (402), der zwischen dem Substrat (2) und dem Deckelelement (42) ausgebildet ist, miteinander kommunizieren, und ein Dekompressionsmechanismus in mindestens einem des unteren Raumteils (404) und des oberen Raumteils (402) bereitgestellt ist, so dass er den unteren Raumteil oder den oberen Raumteil (402) dekomprimiert,
**dadurch gekennzeichnet, dass** das Gerät zur Herstellung einer Wafer-Linse weiterhin einen Spender (32) umfasst, der auf dem Gehäusekörper bereitgestellt ist und einen Nadelteil (33) aufweist, der die XY-Plattform (30) durchdringt, um das fotohärtbare Harz in die Form (64) fallenzulassen.

## Revendications

1. Procédé de fabrication d'une lentille mince dans lequel un membre optique fait de résine photo-durcissable est fourni sur au moins une surface d'un substrat, le procédé comprenant :
une étape de distribution dans laquelle la résine photo-durcissable est laissé tomber dans un moule ayant une surface en forme négative qui corresponde à une forme d'une surface optique du membre optique ;
une étape d'empreinte dans lequel après l'étape de distribution le moule dans lequel la résine photo-durcissable a été laissée tomber et le substrat sont pressés l'un contre l'autre ;
une étape d'exposition dans laquelle après l'étape de gravure, de la lumière est appliquée à la résine photo-durcissable ; et
une étape de démoulage dans laquelle après l'étape d'exposition, le substrat est démoulé,
dans lequel un espace entourant la résine est décompressé dans au moins un part de l'étape de distribution, l'étape d'exposition et l'étape de démoulage.

2. Procédé selon la revendication 1, dans lequel dans l'étape de distribution et après la décompression, l'espace entourant la résine est détendue à la pression atmosphérique.

3. Procédé selon la revendication 1 ou 2, dans lequel dans l'étape d'exposition et après la décompression, l'espace entourant la résine est détendue à la pression atmosphérique.

4. Procédé selon l'une des revendications 1 à 3, dans lequel dans l'étape de détente et après la décompression, l'espace entourant la résine est détendue à la pression atmosphérique.

5. Procédé selon l'une des revendications 2 à 4, dans lequel l'espace entourant la résine est décompressé dans au moins un part de l'étape de gravure.

6. Procédé selon la revendication 5, dans lequel dans l'étape d'empreinte l'espace entourant la résine est détendue à la pression atmosphérique après la décompression dans l'étape de gravure.

7. Appareil fabricant une lentille mince comprenant :
un corps de boitier composé d'une étage XY (30), une plaque de surface (20) et un guide d'axe Z (302), et qui est fourni avec une ouverture dans une surface supérieure de celui-ci et a un membre de couvercle (42) configuré pour fermer l'ouverture ;
un moule (64) qui est fourni à l'intérieure du corps de boitier et a une cavité avec une forme prédéterminée ;
un substrat (2) qui est fourni dans le corps de boitier pour qu'il est orienté vers le moule et verticalement sépare un espace intérieur qui est formé à l'intérieure du corps de boîtier par le membre de couvercle (42) ;
dans lequel une partie d'espace inférieur (404) formée entre le moule (64) et le substrat (2) et une partie d'espace supérieur (402) formée entre le substrat (2) et le membre de couvercle (42) sont en communication l'un avec l'autre, et un mécanisme de décompression est fourni dans au moins l'une de la partie de l'espace inferieure (404) et la partie de l'espace supérieur (402) pour qu'il décompresse la partie de l'espace inferieure ou la partie de l'espace supérieur (402),
**caractérisé par le fait que** l'appareil pour la fabrication de la lentille mince comprend en outre un dispensateur (32) qui est fourni sur le corps de boitier et a une partie d'aiguille (33) qui pénètre dans l'étage XY (30) pour laisser tomber la résine photo-durcissable dans le moule (64).
